# EUROPEAN PATENT SPECIFICATION

(11) **EP 3 626 493 B1**
(45) Date of publication and mention of the grant of the patent: **07.04.2021**
(21) Application number: 18195736.6
(22) Date of filing: 20.09.2018
(51) Int. Cl.: B60H 1/34

(54) **AIR VENT FOR A VEHICLE**
LUFTAUSSTRÖMER FÜR EIN FAHRZEUG
AÉRATEUR POUR UN VÉHICULE

(43) Date of publication of application: 25.03.2020
(73) Proprietor: Illinois Tool Works Inc., Glenview, IL 60025 (US)
(72) Inventor: Prodelal, Marek, 50601 Jicin (CZ)
(74) Representative: Trinks, Ole

(56) References cited:
- JP-A- 2002 103 953
- JP-A- 2003 260 928
- JP-A- 2004 219 030

## Description

The invention is concerned with an air vent for a vehicle, the air vent comprising a housing having an inlet opening and an outlet opening, wherein the housing forms an air channel for air flowing from the inlet opening to the outlet opening, and wherein at least one adjustable front air guide element and at least one adjustable rear air guide element are arranged in the housing, wherein the at least one adjustable rear air guide element is positioned upstream of the at least one adjustable front air guide element with respect to the flow direction of the air, further comprising a control element arranged in the region of the outlet opening for adjusting at least the at least one adjustable rear air guide element.

Such air vents serve to direct fresh air or recycled air into a vehicle interior. The air flows via the inlet opening into the air channel formed by the housing, continues through the air channel and finally exits through the outlet opening into the interior of a vehicle, such as a car or a truck. In the housing adjustable air guide elements, for example, pivotable air guide lamellae are arranged. By adjusting these air guide elements the air flow can be deflected in the desired direction. It is known to arrange a control knob as a control element on a front air guide lamella located inside the outlet opening in order to adjust said lamellae. By tilting the control knob around e.g. a horizontal axis - the axis being horizontal in a mounted state of the air vent in the vehicle - the front air guide lamella the control knob is arranged on is also pivoted about said horizontal axis. Generally a plurality of front air guide lamellae is arranged horizontally one above the other and coupled to each other so that the pivoting movement caused by the operating element is transmitted synchronously to the other air guide lamellae. Known air vents usually comprise additional lamellae as rear air guide elements upstream of the front air guide lamellae, wherein the rear air guide lamellae are pivotally mounted in the housing, for example, about a vertical axis with respect to the mounted state of the air vent inside a vehicle. For pivoting these vertical air guide lamellae the control knob is usually coupled with at least one of these vertically arranged lamellae such that, for example, a displacement of the control knob in a lateral direction is transmitted in a pivoting movement of the rear air guide lamella around its vertical pivot axis. The control knob is thereby moved along the front air guide lamella it is arranged on. As far as a plurality of rear air guide lamellae are provided, these are regularly coupled together so that they pivot synchronously. Such air vents are known e.g. from US 4,957,036 A, DE 20 2014 100 881 U1, DE 20 2012 100 980 U1, EP 2 815 909 A1, DE 10 2015 118 549 B4, JP 2002 103953 A, JP 2003 260928 A and JP 2004 219030 A.

Therefore, an object of the invention is to provide an air vent for a vehicle, of the type mentioned initially which is visually more appealing.

The invention achieves the object by the subject matter of independent claim 1. Advantageous embodiments of the invention can be found in the dependent claims.

The air vent is used in a vehicle such as a car or truck. The housing forms an air channel for air to be lead into the interior of the vehicle. For this purpose, the air enters the housing through the inlet opening and, after flowing through the air channel, flows out through the outlet opening into the vehicle interior. The air vent may e.g. be of rectangular or of a round shape, in particular the air channel and/or the outlet opening may have a rectangular or round shape. At least one adjustable front air guide element is provided in the housing, in particular near the outlet opening. Against the flow direction of the air upstream of the at least one front air guide element at least one adjustable rear air guide element is located in the housing. By adjusting the at least one rear or the at least one front air guide element, the air guided into the vehicle interior can be deflected as desired in a manner known per se. Adjustable air guide elements can mean that the air guide elements are moveable, in particular pivotable, between two end positions.

For adjusting at least the at least one rear air guide element a control element is arranged in the region of the outlet opening which may be a control knob. The control element may also be designed for adjusting the at least one front air guide element, as will be explained later. The control element may be arranged e.g. inside of or in front of the outlet opening. The control element acts via a transmission element on the at least one rear air guide element, wherein the transmission element may in particular extend in a direction opposite to the flow direction of the air in the air channel. The transmission element transmits a movement of the control element into a movement of the at least one rear air guide element. The control element and the transmission element may be separate parts or they may be the same part, in particular a one-piece part. As already mentioned, in particular a plurality of front air guide elements and/or a plurality of rear air guide elements can be provided. If a plurality of front air guide elements is provided, the front air guide elements can be coupled to one another so that they are moved synchronously during a movement of one of the front air guide elements, in particular caused by the control element. If a plurality of rear air guide elements are provided, the rear air guide elements can likewise be coupled to one another so that they are also moved synchronously when one of the rear air guide elements, caused by the control element, moves. The air guide elements may be air guide lamellae each of which being pivotable around an axis of rotation. So the air guide lamellae may be adjustable by being pivoted.

According to the invention the control element is carried by the at least one rear air guide element. In other words the control element is supported on the at least one rear air guide element. In particular, the control element is carried by or supported on the at least one rear air guide element via the transmission element which extends between the control element and the at least one rear air guide element in a direction upstream. If a plurality of rear air guide elements is provided the control element can be supported on only one of them or on multiple of the rear air guide elements, in particular on all of them. In particular, the control element can be carried by or supported on the at least one rear air guide element such that the control element is held against gravity in a mounted state of the air vent in a vehicle. The control element is carried by the at least one rear air guide element, but not on any one of the at least one front air guide elements. Thus, if the control element is coupled to one or more of the at least one front air guide elements such coupling would not carry or support the control element, but would only transmit the movement of the control element on the at least one front air guide element. Thus, according to the invention, the control element is carried or supported by the at least one rear air guide element, in particular without being carried or supported by the at least one front air guide element (although a connection between the control element and the front lamellae may exist, as mentioned). Due to such arrangement the control element appears to float freely inside or in front of the outlet opening. Such is visually appealing to a driver or passenger of the vehicle the air vent is mounted in. Also, air vents with such a floating control element, in particular a control knob, may be cleaned more easily. The floating effect of the control element may be enhanced e.g. by arranging the transmission element so that it is - at least partially - obscured by the control element, as mentioned above. Also the at least two front air guide elements may be obscured so that they are generally not visible from outside the air vent to enhance the floating effect, as will be explained later on.

According to an embodiment of the invention at least two adjustable front air guide elements are provided, wherein the control element and/or the first transmission element extend through a clearance between the at least two adjustable front air guide elements. According to this embodiment instead of being arranged on one of the at least two front air guide elements - as in the state of the art discussed initially - the control element and/or its first transmission element extends through a clearance or free space between the at least two front air guide elements. In particular, the control element and/or the first transmission element extends through the clearing/free space between two neighboring front air guide elements. The control element is thus arranged in a distance to two neighboring front air guide elements, in particular to all the front air guide elements. For example, the control element may be arranged midway between two front air guide elements. The control element may also be arranged in front of the at least two front air guide elements, i.e. downstream of the at least two front air guide elements with respect to the flow direction of the air. In this case only the first transmission element may extend through said clearance between the at least two front air guide elements. Also, the control element may be arranged in the clearance and may therefore itself extend through said clearance between the at least two front air guide elements. In particular, the control element and its first transmission element may each extend at least partly through the clearance. The control element may nonetheless be connected with the at least two front air guide elements in order to adjust the at least two front air guide elements, as mentioned above. The control element and the first transmission element may be separate parts or they may be the same part, in particular a one-piece part, as already mentioned. The first transmission element may be at least partially concealed/obscured by the control element with respect to a view from outside the air vent through the outlet opening into the air channel, in particular upstream.

According to the invention the transmission element for transmitting a movement of the control element into a movement of the at least one adjustable rear air guide element constitutes a first transmission element, wherein the control element is connected to the at least one adjustable front air guide element upstream of the outlet opening via a second transmission element, wherein the second transmission element is adapted to transmit a movement of the control element into a movement of the at least one adjustable front air guide element.

According to this embodiment the control element is connected to the at least one front air guide element upstream of the outlet opening, i.e. not inside or in front of the outlet opening. For example, the second transmission element connecting the control element to one or more of the at least one front air guide elements may be attached, in particular in a moveable manner, to one or more of the at least one front air guide elements from a backside. The backside meaning the part of the at least one front air guide element being arranged upstream, at least in a neutral position of the at least one front air guide element. The first and second transmission elements may be arranged independent from one another. In particular, they may be connected to one another only via the control element. Due to the connection of the control element (via the second transmission element) to the at least one front air guide element upstream of the outlet opening said connection is not or only partially visible from outside the air vent, i.e. when looking from the outside upstream inside the outlet opening. Therefore, the upstream connection of the control element to the at least one front air guide element does not interfere with the floating effect of the control element.

According to a further embodiment of the invention the first transmission element and/or the second transmission element are at least partially concealed by the control element with respect to a view from outside the air vent through the outlet opening into the air channel. As already mentioned, the first transmission element may be concealed/obscured by the control element at least in part as to increase the floating effect of the control element. Alternatively or additionally the second transmission element may be concealed/obscured by the control element at least in part. This would increase the floating effect as well.

According to the invention the first transmission element comprises an indentation for receiving a part of the second transmission element during the movement of the at least one adjustable front air guide element. Due to such an indentation the transmission elements are not in their way and thus the control element may be adapted to adjust the at least one adjustable front air guide element and the at least one adjustable rear air guide element although not being arranged on one of the at least one adjustable front air guide element.

Also, the two transmission elements may be arranged in a space-saving manner so that the air channel and in particular the whole air vent may be embellished compactly.

According to an embodiment of the invention the at least one adjustable front air guide element comprises at least one front air guide lamella being pivotable around a first axis of rotation and the at least one adjustable rear air guide element comprises at least one rear air guide lamella being pivotable around a second axis of rotation, wherein the first axis is essentially perpendicular to the second axis of rotation. As already mentioned the air guide elements may comprise air guide lamellae. As the first axis of rotation is perpendicular to the second axis of rotation the air flowing through the air channel may be directed by the lamellae in any desirable direction, e.g. upwards or downwards or to the sides or to any direction in-between. Thus, the air guide lamellae may be arranged as horizontal and vertical lamellae as initially explained.

According to a further embodiment of the invention the control element is adapted to be moved basically in two direction on a first movement axis and in two directions on a second movement axis wherein the first movement axis and the second movement axis are perpendicular to one another. Thus, both the at least one front air guide lamella as well as the at least one rear air guide lamella may be adjusted by the same control element. In particular the at least one front air guide lamella and the at least one rear air guide lamella may be pivoted around their respective axes moving the control element along its respective movement axis. The control element may thereby be moved not exactly on said movement axes, but in the general directions defined by said movement axes. For example, according to a further embodiment of the invention the control element is carried by the at least one adjustable rear air guide element such that in order to move the at least one adjustable rear air guide element the control element is moveable along a curve. Such a movement may in particular result from the at least one rear air guide element comprising at least one pivotable air guide lamella. Therefore, according to a further embodiment the at least one rear air guide element comprises at least one air guide lamella being pivotable around an axis of rotation, wherein the control element is moveable along the curve in order to pivot the at least one air guide lamella around its axis of rotation. The control element may then follow the pivotal movement of the at least one air guide lamella. Such a curved movement may also be understood as a movement of the control element basically along one of the movement axes. For example, the air flow leaving the outlet opening of the housing of the air vent may be directed up or down by moving the control element up or down, in particular by tilting the control element around its first axis of movement and thereby moving the control element up or down along the second movement axis. Also, the air flow may be directed to the sides by moving the control element to the respective side along its first movement axis, in particular along said curve. Therefore, the air flow is directed in the direction the control element is moved. This kind of control of the air flow is very intuitive. With the state of the art, however, such movement of the control element was possible only when supporting the control element on the front air guide lamellae by arranging it on one these lamellae. With the inventive fixing of the control element on the at least one rear air guide element such an intuitive movement is possible - when designing the first and second transmission elements in a suited manner - without having to arrange the control element on one of the front lamellae.

According to an embodiment of the invention at least one of the at least one adjustable front air guide element is concealed at least partially with respect to a view from outside the air vent through the outlet opening into the air channel. If only one front air guide element is provided it may be concealed as such. Should more than one front air guide element be provided at least one of them may be concealed. According to a further embodiment the housing comprises a bezel defining the outlet opening wherein the bezel conceals the at least one of the at least one adjustable front air guide element at least partially.

Thus, the at least one front air guide element may be hidden from sight when looking upstream and/or along a longitudinal axis of the housing from the outside into the outlet opening. The front air guide element may be concealed at least in a neutral position of the front air guide element wherein the front air guide element do not influence the direction of the air flow in their neutral position. Such an arrangement may enhance the floating effect of the control knob as a driver or co-driver of the vehicle the air vent is adapted to be mounted in only sees the control element as a moving part.

According to an embodiment of the invention the at least one adjustable rear air guide element is adapted to be moved into a closed position closing the air channel. Thus, the at least one rear air guide element can serve not only as a means for directing the air flow but also as a means for reducing and stopping the air flow. In the closed position the at least one rear air guide element may thus reduce the free flow cross section of the air channel basically to zero.

Embodiments will be explained in the following with respect to the figures. The figures show:
Fig. 1 an air vent according to a first embodiment which belongs to the invention, in an exploded view,
Fig. 2 the air vent of Fig. 1 in a front view,
Fig. 3 the air vent of Fig. 1 in a first sectional view,
Fig. 4 the air vent of Fig. 1 in a second sectional view,
Fig. 5 an air vent according to a second embodiment which belongs to the invention, in an exploded view,
Fig. 6 the air vent of Fig. 5 in a front view,
Fig. 7 the air vent of Fig. 5 in a first sectional view,
Fig. 8 the air vent of Fig. 5 in a second sectional view
Fig. 9 an air vent according to a third embodiment which does not belong to the invention, in an exploded view,
Fig. 10 the air vent of Fig. 9 in a front view,
Fig. 11 the air vent of Fig. 9 in a first sectional view, and
Fig. 12 the air vent of Fig. 9 in a second sectional view.

Unless otherwise indicated in the following the same reference signs denote the same elements.

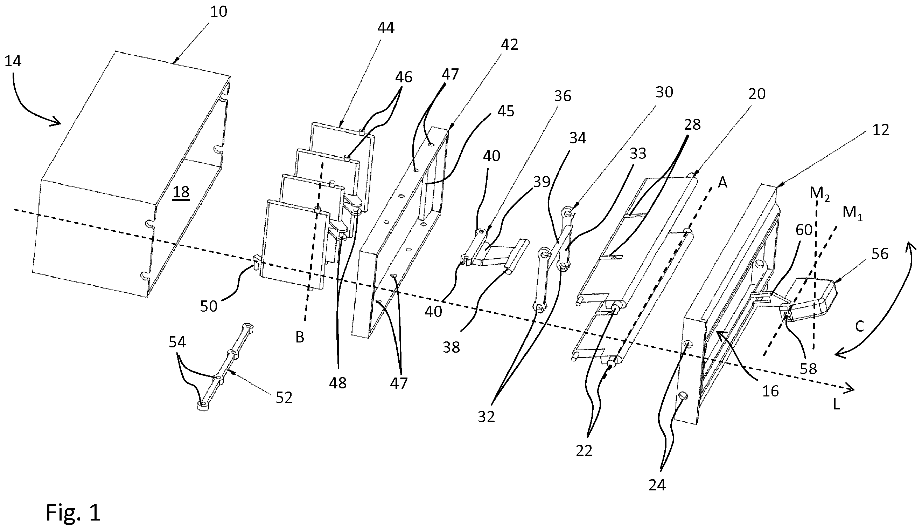

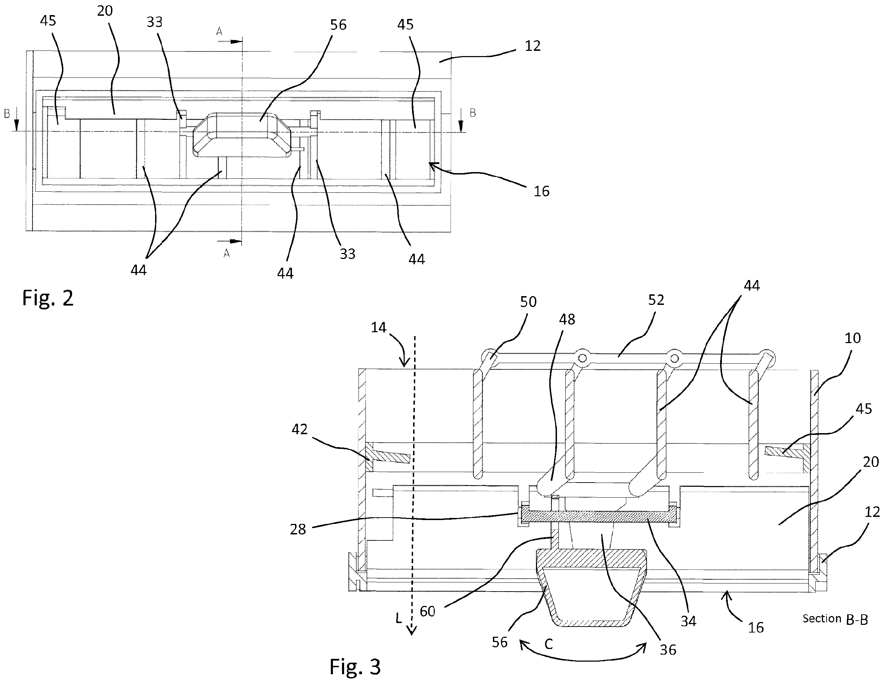

Figures 1 to 4 show a first embodiment of an air vent according to the invention. The air vent comprises a housing 10 with a bezel 12 wherein the housing forms an air channel 18 for air flowing from an inlet opening 14 to an outlet opening 16 arranged in the bezel 12. The air vent further comprises two front air guide lamellae as front air guide elements 20 and four rear air guide lamellae as rear air guide elements 44. The front air guide elements 20 are each mounted pivotally about respective rotation axes A in the housing 10 wherein mounting pins 22 arranged on the rotation axes A extend into bearing openings 24 of the bezel 12. The rear air guide elements 44 are each mounted in the housing 10 pivotally about respective rotation axes B which are arranged perpendicular to the rotation axes A. Mounting pins 46 extending from each of the rear air guide elements 44 along opposite sides along the respective rotation axes B extend into bearing openings 47 of a supporting frame 42. The supporting frame 42 may be formed integrally with the housing 10 or may be formed separately and inserted into the housing along with the rear air guide elements 44. The rear air guide elements 44 are arranged upstream of the front air guide elements 20 with respect to a flow direction L of the air flowing through the air channel 18. The air guide elements 20, 44 are adjustable via a control element 56.

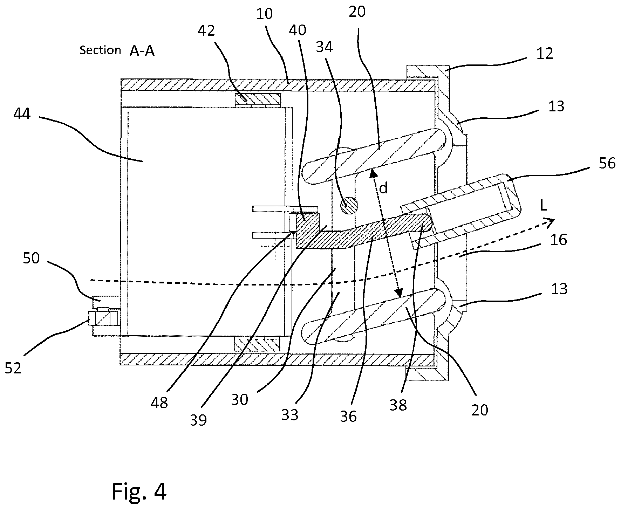

According to the invention the control element 56 is carried by/supported on the rear air guide elements 44 via a first transmission element 36 wherein the first transmission element 36 extends between the control element 56 and the rear air guide elements 44 basically along the direction of air flow L. In order to carry the control element 56 the first transmission element 36 is connected to the two inner air guide elements of the four rear air guide elements 44 by latching means 40 arranged on the upstream end of the first transmission element 36, wherein the latching means 40 grab corresponding latching means 48 protruding from the inner two of the rear air guide elements 44. On the downstream end of the first transmission element 36 a bearing section 38 is provided which opposite ends extend into bearing openings 58 of the control element 56. Thus, the control element 56 is attached to the first transmission element 36 pivotally around a first movement axis M₁. The first transmission element 36 is held by the inner two of the rear air guide elements 44 such that it can be moved along a horizontal plane, and thus basically in two opposite directions along the first movement axis M₁. This way the control element 56 is supported by inner two of the rear air guide elements 44 such that the control element 56 is held securely against gravity in a horizontally mounted state of the air vent inside a vehicle. The control element 56 and the first transmission element thereby extend through a clearance between the front air guide elements 20 as can be seen in fig. 4 in particular. The two front air guide elements 20 are arranged in a distance d from one another thereby defining said clearance. As the control element 56 and/or the first transmission element 36 extend through said clearance in a distance to each of the front air guide elements 20 the control element seems to be floating inside the outlet opening 16. In order to enhance the floating effect of control element 56 the front air guide elements 20 are at least partially concealed from view by protruding portions 13 of the bezel 12 when looking from outside the air vent through the outlet opening 16 into the air channel 18. In particular in a neutral state, i.e. when arranged basically horizontally, the front air guide elements 20 are hidden behind the bezel 12. Also, the first transmission element 36 is at least partially obscured by the control element 56 when looking into the outlet opening 16 from the outside. Thus, a driver or co-driver of a car with an inventive air vent gains the impression of a floating control element.

The control element 56 is moveable to the sides along a curve C lying in said horizontal plane as shown in some of the figures. By moving the control element 56 along said curve C the control element 56 is basically moved to the sides along the first movement axis M₁ and pivots the inner two of the rear air guide elements 44 around their respective rotation axes B. The rear air guide elements 44 are coupled in their movement via a coupling rod 52 wherein each of the rear air guide elements 44 comprises a pin 50 extending into bearing openings 54 of the coupling rod 52. Thus, all of the rear air guide elements 44 are pivoted by the control element 56. In a mounted state of the air vent the air flow leaving the outlet opening 16 may therefore be directed to either side. The rear air guide elements 44 may be pivoted into a closed position by moving the control element 56 along the curve C in an end position wherein the rear air guide elements 44 stop the air flow L completely. In said closed position (not shown) the outer ones of the rear air guide elements 44 come into contact with stop elements 45 extending from the supporting frame 42 into the air channel 18.

In addition the movement of the control element 56 can be transmitted to the front air guide elements 20 via second transmission element 30. The second transmission element 30 has an H-shape comprising two vertical coupling arms 33 connected by a horizontal connection arm 34. Of course other shapes of the transmission element are possible. The second transmission element 30 is coupled to each of the front air guide elements 20 by latching means 32 arranged on both ends of the vertical coupling arms wherein the latching means 32 grab latching means 28 arranged in a backside of the front air guide elements 20. The control element 56 acts on the second transmission element 30 via a fork 60 extending upstream from a backside of the control element 56 wherein the fork 60 receives the horizontal connection arm 34 of the second transmission element 30. When the control element 56 is pivoted around its first movement axis M₁ the control element is moved up or down basically on a second movement axis M₂ perpendicular to the first movement axis M₁. Thus, the fork 60 is pivoted as well and the fork 60 thereby moves the second transmission element 30 up or down. Thus, the front air guide elements 20 are pivoted around their respective rotation axes A. This way the air flow may be directed up or down as can be seen in Fig. 4 where the front air guide elements 20 direct the air flow L upwards. The control element 56 may therefore basically be moved up or down and to the sides in order to direct the air flow leaving the outlet opening in the corresponding direction similar to known control elements mentioned initially. However, this natural movement of the control element can be achieved without having to arrange the control element on one of the front air guide lamellae. The second transmission element 30 is arranged as far upstream of the outlet opening 16 - due to the coupling of the second transmission element 30 on the backside of the front air guide elements 20 - that it cannot or can barely be seen when looking into the outlet opening 16 from the outside. Thus, the arrangement of the second transmission element 30 does not interfere with the floating effect. The first transmission element 36 comprises an indentation 39 for receiving the horizontal connection arm 34 of the second transmission element 36 during the movement of the front air guide elements 20 as can be seen in fig. 4 in particular. This allows for a compact arrangement of the transmission elements.

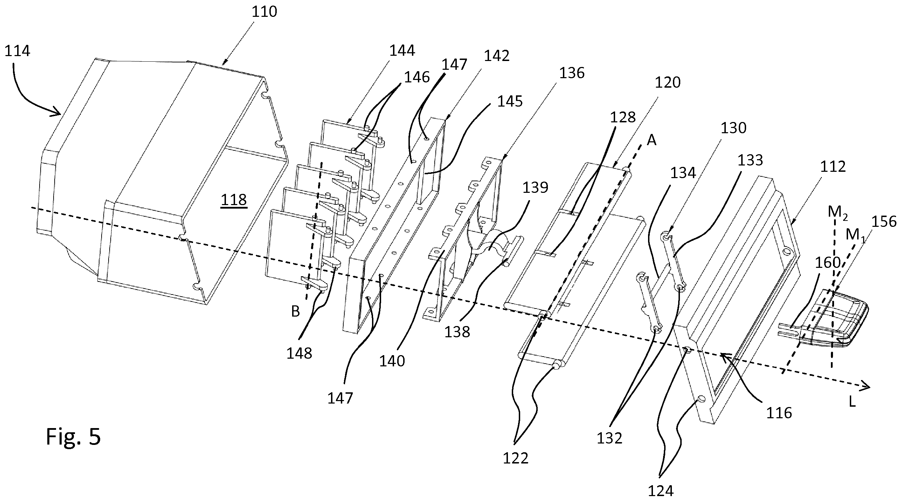

Figure 5 to 8 show a second embodiment of an air vent according to the invention which differs from the first embodiment in general in particular in the design of the first transmission element.

The air vent of the second embodiment also comprises a housing 110 with a bezel 112 wherein the housing forms an air channel 118 for air flowing from an inlet opening 114 to an outlet opening 116 arranged in the bezel 112. The bezel 112 and therefore the outlet opening 116 are arranged at an angle to a vertical direction. The air vent further comprises two front air guide lamellae as front air guide elements 120 and five rear air guide lamellae as rear air guide elements 144. The front air guide elements 120 are each mounted pivotally around respective rotation axes A in the housing 110 wherein mounting pins 122 arranged on the rotation axes A extend into bearing openings 124 of the bezel 112. The rear air guide elements 144 are each mounted in the housing 110 pivotally around respective rotation axes B which are arranged perpendicular to the rotation axes A. Mounting pins 146 extending from each of the rear air guide elements 144 along opposite sides along the respective rotation axes B extend into bearing openings 147 of a supporting frame 142. The supporting frame 142 may be formed integrally with the housing 110 or may be formed separately and inserted into the housing along with the rear air guide elements 144. The rear air guide elements 144 are arranged upstream of the front air guide elements 120 with respect to a flow direction L of the air flowing through the air channel 118. The air guide elements 120, 144 are adjustable via a control element 156.

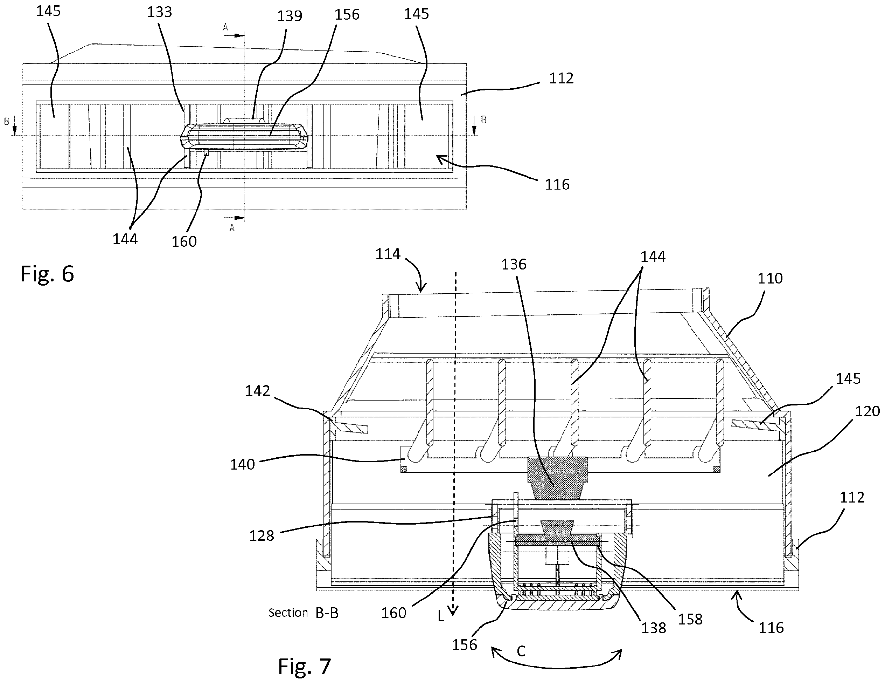

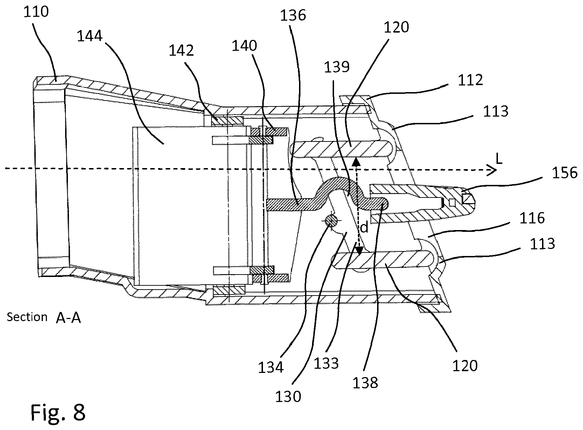

According to the invention the control element 156 is carried by/supported on the rear air guide elements 144 via a first transmission element 136 wherein the first transmission element 136 extends between the control element 156 and the rear air guide elements 144 basically along the direction of air flow L. In order to carry the control element 156 the first transmission element 136 is connected to the rear air guide elements 144 by a latching frame 140 arranged on the upstream end of the first transmission element 136, wherein the latching frame 140 comprises bearing openings that receive corresponding pins 148 of each of the rear air guide elements 144. On the downstream end of the first transmission element 136 a bearing section 138 is provided which opposite ends extend into bearing openings 158 arranged inside of the control element 156 as can be seen in fig. 7. Thus, the control element 156 is attached to the first transmission element 136 pivotally around a first movement axis M₁. The first transmission element 136 is held by the rear air guide elements 144 such that it can be moved along a horizontal plane, and thus basically in two opposite directions along the first movement axis M₁ just like with the air vent of the first embodiment. This way the control element 156 is supported by the rear air guide elements 144 such that the control element 156 is held securely against gravity in a horizontally mounted state of the air vent inside a vehicle. The control element 156 and the first transmission element 136 thereby extend through a clearance between the front air guide elements 120 as can be seen in fig. 8 in particular. The two front air guide elements 120 are arranged in a distance d from one another thereby defining said clearance. As the control element 156 and/or the first transmission element 136 extend through said clearance in a distance to each of the front air guide elements 120 the control element 156 seems to be floating inside the outlet opening 116. In order to enhance the floating effect of control element 156 the front air guide elements 120 are at least partially concealed from view by protruding portions 113 of the bezel 112 when looking from outside the air vent through the outlet opening 116 into the air channel 118. In particular in a neutral state, i.e. when arranged basically horizontally as shown in fig. 8, the front air guide elements 120 are hidden behind the bezel 112. Also, the first transmission element 136 is at least partially obscured by the control element 156 when looking into the outlet opening 116 from the outside. Thus, a driver or co-driver of a car with an inventive air vent gains the impression of a floating control element.

The control element 156 is moveable to the sides along a curve C lying in said horizontal plane as shown in some of the figures. By moving the control element 156 along said curve C the control element 156 is basically moved to the sides along the first movement axis M₁ and pivots the rear air guide elements 144 around their respective rotation axes B. Thus, all of the rear air guide elements 144 are pivoted by the control element 156. In a mounted state of the air vent the air flow leaving the outlet opening 116 may therefore be directed to either side. The rear air guide elements 144 may be pivoted into a closed position by moving the control element 156 along the curve C in an end position wherein the rear air guide elements 144 stop the air flow L completely. In said closed position (not shown) the outer ones of the rear air guide elements 144 come into contact with stop elements 145 extending from the frame 142 into the air channel 118.

In addition the movement of the control element 156 can be transmitted to the front air guide elements 120 via a second transmission element 130. The second transmission element 130 has an H-shape comprising two vertical coupling arms 133 connected by a horizontal connection arm 134. The second transmission element 130 is coupled to each of the front air guide elements 120 by latching means 132 arranged on both ends of the vertical coupling arms wherein the latching means 132 grab latching means 128 arranged in a backside of the front air guide elements 120. The control element 156 acts on the second transmission element 130 via a fork 160 extending upstream from a backside of the control element 156 wherein the fork 160 receives the horizontal connection arm 134 of the second transmission element 130.

When the control element 156 is pivoted around its first movement axis M₁ the control element is moved up or down basically on a second movement axis M₂ perpendicular to the first movement axis M₁. Thus, the fork 160 is pivoted as well and the fork 160 thereby moves the second transmission element 130 up or down. Thus, the front air guide elements 120 are pivoted around their respective rotation axes A. This way the air flow may be directed up or down. The control element 156 may therefore basically be moved up or down and to the sides in order to direct the air flow leaving the outlet opening in the corresponding direction similar to known control elements mentioned initially. However, this natural movement of the control element can be achieved without having to arrange the control element on one of the front air guide lamellae. The second transmission element 130 is arranged as far upstream of the outlet opening 116 - due to the coupling of the second transmission element 130 on the backside of the front air guide elements 120 - that it cannot or can barely be seen when looking into the outlet opening 116 from the outside. Thus, the arrangement of the second transmission element 130 does not interfere with the floating effect. The first transmission element 136 comprises an indentation 139 formed in an arched part of the first transmission element 136 for receiving the horizontal connection arm 134 of the second transmission element 130 during the movement of the front air guide elements 120 as can be derived from fig. 8 in particular. This allows for a compact arrangement of the transmission elements.

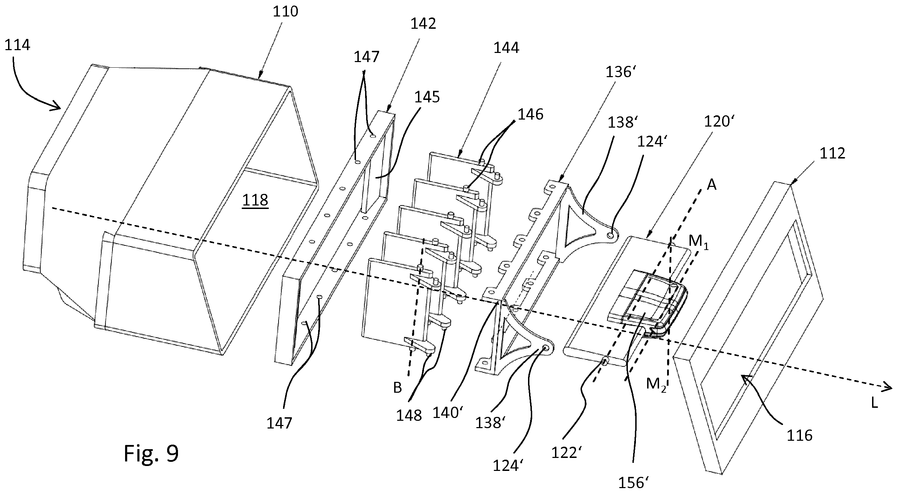

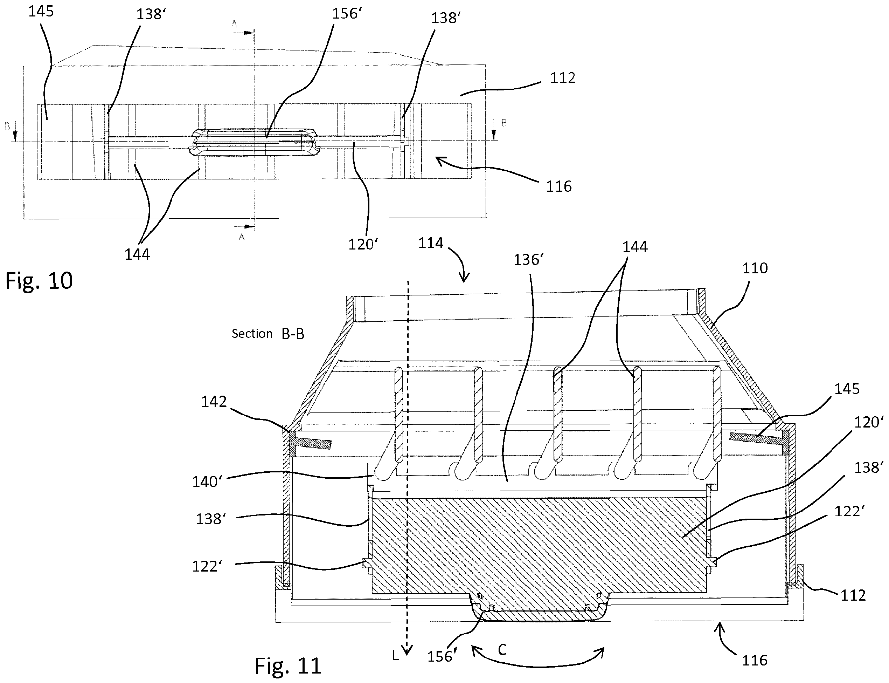

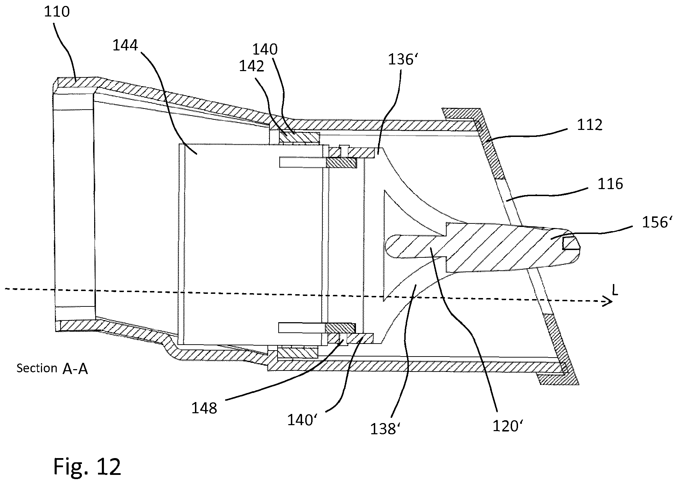

In Figures 9 to 12 a third embodiment which does not belong to the invention is shown. This embodiment differs from the previously explained second embodiment in that not only the control element 156' but also a front air guide element 120', i.e. an air guide lamella, is carried by the rear air guide elements 144. In this embodiment only one front air guide element 120' is provided which is arranged in the housing 110 via mounting pins 122' being received in bearing openings 124' of a first transmission element 136'. Similar to the first transmission element 136 of the second embodiment the transmission element 136' is connected to the rear air guide elements 144 by a latching frame 140' arranged on the upstream end of the transmission element 136', wherein the latching frame 140' comprises bearing openings that receive corresponding pins 148 of each of the rear air guide elements 144. On the downstream end of the transmission element 136' two bearing sections 138' extend comprising the bearing openings 124'.

Therefore, the front air guide element 120' is carried by or supported on the rear air guide elements 144 and seems to be floating in the outlet opening 116. The control element 156' forms a part of the front air guide element 120' and is therefore carried by the rear air guide elements 144 as well and also seems to float. The control element and the front air guide element may be one-piece or they may be separate pieces attached to one another. In the latter case the control element is fixed to the front air guide element such that no relative movement between these two parts is possible. Of course, further front air guide elements may be provided which may be coupled to the front air guide element 120'. The front air guide element 120' extends along its rotation axis A about a distance smaller than the width of the outlet opening 116 along the same axis which enhances the floating appearance of the front air guide element 120'. In this embodiment no second transmission element is necessary as only one front air guide element is provided.

When moving the control element 156' up or down along its movement axis M₂ the front air guide element 120' is pivoted up or down about its rotation axis A, respectively. Thus, the air flow may be guided up or down. In order to guide the air flow leaving the outlet opening 116 to the sides the control element 156' is moved to the respective side along its movement axis M₁. Along with the control element 156' the front air guide element 120' and thus the transmission element 136' are moved to the respective side. Through this movement of the transmission element 136' the rear air guide elements 144 are pivoted about their rotation axes B.

### List of references

- 10, 110: housing
- 12, 112: bezel
- 13, 113: protruding portions
- 14, 114: inlet opening
- 16, 116: outlet opening
- 18, 118: air channel
- 20, 120: front air guide elements
- 120': front air guide element
- 22, 122: mounting pins
- 122': mounting pins
- 24, 124: bearing openings
- 124': bearing openings
- 28, 128: latching means
- 30, 130: second transmission element
- 32, 132: latching means
- 33, 133: vertical coupling arms
- 34, 134: horizontal connection arm
- 36, 136: first transmission element
- 136': (first) transmission element
- 38, 138: bearing section
- 138': bearing sections
- 39, 139: indentation
- 40, 140: latching means
- 140': latching frame
- 42, 142: supporting frame
- 44, 144: rear air guide elements
- 45, 145: stop elements
- 46, 146: mounting pins
- 47, 147: bearing openings
- 48, 148: latching means/pins
- 50: pin
- 52: coupling rod
- 54: bearing openings
- 56, 156: control element
- 156': control element
- 58, 158: bearing openings
- 60, 160: fork
- A: rotation axes
- B: rotation axes
- d: distance
- L: air flow direction
- M₁: first movement axis
- M₂: second movement axis

## Claims

1. An air vent for a vehicle, the air vent comprising a housing (10, 110) having an inlet opening (14, 114) and an outlet opening (16, 116), wherein the housing (10, 110) forms an air channel (18, 118) for air flowing from the inlet opening (14, 114) to the outlet opening (16, 116), and wherein at least one adjustable front air guide element (20, 120) and at least one adjustable rear air guide element (44, 144) are arranged in the housing (10, 110), wherein the at least one adjustable rear air guide element (44, 144) is positioned upstream of the at least one adjustable front air guide element (20, 120) with respect to the flow direction (L) of the air, further comprising a control element (56, 156) arranged in the region of the outlet opening (16, 116) for adjusting at least the at least one adjustable rear air guide element (44, 144), wherein the control element (56, 156) is carried by at least one of the at least one adjustable rear air guide element (44, 144) via a transmission element (36, 136) extending between the control element (56, 156) and the at least one adjustable rear air guide element (44, 144), wherein the transmission element (36, 136) is adapted to transmit a movement of the control element (56, 156) into a movement of the at least one adjustable rear air guide element (44, 144), the transmission element for transmitting a movement of the control element (56, 156) into a movement of the at least one adjustable rear air guide element (44, 144) constitutes a first transmission element (36, 136), **characterized in that** the control element (56, 156) is connected to the at least one adjustable front air guide element (20, 120) upstream of the outlet opening (16, 116) via a second transmission element (30, 130), wherein the second transmission element (30, 130) is adapted to transmit a movement of the control element (56, 156) into a movement of the at least one adjustable front air guide element (20, 120), wherein the first transmission element (36, 136) comprises an indentation (39, 139) for receiving a part of the second transmission element (30, 130) during the movement of the at least one adjustable front air guide element (20, 120).

2. Air vent according to claim 1,
**characterized in that**
at least two adjustable front air guide elements (20, 120) are provided, wherein the control element (56, 156) and/or the first transmission element (36, 136) extend through a clearance between the at least two adjustable front air guide elements (20, 120).

3. Air vent according to one of the preceding claims,
**characterized in that**
the first transmission element (36, 136) and/or the second transmission element (30, 130) are at least partially concealed by the control element (56, 156) with respect to a view from outside the air vent through the outlet opening (16, 116) into the air channel (18, 118).

4. Air vent according to one of the preceding claims,
**characterized in that**
the at least one adjustable front air guide element comprises at least one front air guide lamella (20, 120) being pivotable around a first axis of rotation (A) and **in that** the at least one adjustable rear air guide element comprises at least one rear air guide lamella (44, 144) being pivotable around a second axis of rotation (B), wherein the first axis of rotation (A) is essentially perpendicular to the second axis of rotation (B).

5. Air vent according to claim 4,
**characterized in that**
the control element (56, 156) is adapted to be moved basically in two directions on a first movement axis (M₁) and in two directions on a second movement axis (M₂) wherein the first movement axis (M₁) and the second movement axis (M₂) are perpendicular to one another.

6. Air vent according to one of the preceding claims,
**characterized in that**
the control element (56, 156) is carried by the at least one adjustable rear air guide element (44, 144) such that in order to move the at least one adjustable rear air guide element (44, 144) the control element (56, 156) is moveable along a curve.

7. Air vent according to one of the preceding claims,
**characterized in that**
at least one of the at least one adjustable front air guide element (20, 120) is concealed at least partially with respect to a view from outside the air vent through the outlet opening (16, 116) into the air channel (18, 118).

8. Air vent according to claim 7,
**characterized in that**
the housing (10, 110) comprises a bezel (12, 112) defining the outlet opening (16, 116) wherein the bezel (12, 112) conceals the at least one of the at least one adjustable front air guide element (20, 120) at least partially.

9. Air vent according to one of the preceding claims,
**characterized in that**
the at least one adjustable rear air guide element (44, 144) is adapted to be moved into a closed position closing the air channel (18, 118).

## Patentansprüche

1. Luftausströmer für ein Fahrzeug, wobei der Luftausströmer ein Gehäuse (10, 110) umfasst, das eine Einlassöffnung (14, 114) und eine Auslassöffnung (16, 116) aufweist, wobei das Gehäuse (10, 110) einen Luftkanal (18, 118) für von der Einlassöffnung (14, 114) zur Auslassöffnung (16, 116) strömende Luft ausbildet und wobei mindestens ein einstellbares vorderes Luftleitungselement (20, 120) und mindestens ein einstellbares hinteres Luftleitungselement (44, 144) im Gehäuse (10, 110) angeordnet ist, wobei das mindestens eine einstellbare hintere Luftleitungselement (44, 144) dem mindestens einen einstellbaren vorderen Luftleitungselement (20, 120) in Bezug zur Strömungsrichtung (L) der Luft vorgelagert angeordnet ist, ferner ein Steuerelement (56, 156) umfassend, das im Bereich der Auslassöffnung (16, 116) angeordnet ist, um mindestens das mindestens eine hintere Luftleitungselement (44, 144) einzustellen, wobei das Steuerelement (56, 156) über ein Übertragungselement (36, 136), das sich zwischen dem Steuerelement (56, 156) und dem mindestens einen einstellbaren hinteren Luftleitungselement (44, 144) erstreckt, von mindestens einem des mindestens einen einstellbaren hinteren Luftleitungselements (44, 144) getragen wird, wobei das Übertragungselement (36, 136) dazu eingerichtet ist, eine Bewegung des Steuerelements (56, 156) in eine Bewegung des mindestens einen einstellbaren hinteren Luftleitungselements (44, 144) zu übertragen, wobei das Übertragungselement zum Übertragen einer Bewegung des Steuerelements (56, 156) in eine Bewegung des mindestens einen einstellbaren hinteren Luftleitungselements (44, 144) ein erstes Übertragungselement (36, 136) darstellt,
**dadurch gekennzeichnet, dass**
das Steuerelement (56, 156) mit dem mindestens einen einstellbaren vorderen Luftleitungselement (20, 120) über ein zweites Übertragungselement (30, 130) der Auslassöffnung (16, 116) vorgelagert verbunden ist, wobei das zweite Übertragungselement (30, 130) dazu eingerichtet ist, eine Bewegung des Steuerelements (56, 156) in eine Bewegung des mindestens einen einstellbaren vorderen Luftleitungselements (20, 120) zu übertragen, wobei das erste Übertragungselement (36, 136) eine Einkerbung (39, 139) umfasst, um einen Teil des zweiten Übertragungselements (30, 130) während der Bewegung des mindestens einen einstellbaren vorderen Luftleitungselements (20, 120) aufzunehmen.

2. Luftausströmer nach Anspruch 1, **dadurch gekennzeichnet, dass**
mindestens zwei einstellbare vordere Luftleitungselemente (20, 120) vorgesehen sind, wobei sich das Steuerelement (56, 156) und/oder das erste Übertragungselement (36, 136) durch einen Zwischenraum zwischen den mindestens zwei einstellbaren vorderen Luftleitungselementen (20, 120) erstreckt/erstrecken.

3. Luftausströmer nach einem der vorstehenden Ansprüche, **dadurch gekennzeichnet, dass**
das erste Übertragungselement (36, 136) und/oder das zweite Übertragungselement (30, 130) in Bezug zu einer Ansicht von außerhalb des Luftausströmers durch die Auslassöffnung (16, 116) in den Luftkanal (18, 118) zumindest teilweise durch das Steuerelement (56, 156) verdeckt werden.

4. Luftausströmer nach einem der vorstehenden Ansprüche, **dadurch gekennzeichnet, dass**
das mindestens eine einstellbare vordere Luftleitungselement mindestens eine vordere Luftleitungslamelle (20, 120) umfasst, die um eine erste Drehachse (A) verschwenkbar ist, und dass das mindestens eine einstellbare hintere Luftleitungselement mindestens eine hintere Luftleitungslamelle (44, 144) umfasst, die um eine zweite Drehachse (B) verschwenkbar ist, wobei die erste Drehachse (A) im Wesentlichen senkrecht zur zweiten Drehachse (B) ist.

5. Luftausströmer nach Anspruch 4, **dadurch gekennzeichnet, dass** das Steuerelement (56, 156) dazu eingerichtet ist, grundsätzlich auf einer ersten Bewegungsachse (M₁) in zwei Richtungen bewegt zu werden und auf einer zweiten Bewegungsachse (M₂) in zwei Richtungen bewegt zu werden, wobei die erste Bewegungsachse (M₁) und die zweite Bewegungsachse (M₂) senkrecht zueinander sind.

6. Luftausströmer nach einem der vorstehenden Ansprüche, **dadurch gekennzeichnet, dass**
das Steuerelement (56, 156) derart von dem mindestens einen einstellbaren hinteren Luftleitungselement (44, 144) getragen wird, dass das Steuerelement (56, 156) entlang einer Kurve beweglich ist, um das mindestens eine einstellbare hintere Luftleitungselement (44, 144) zu bewegen.

7. Luftausströmer nach einem der vorstehenden Ansprüche, **dadurch gekennzeichnet, dass**
mindestens eins des mindestens einen einstellbaren vorderen Luftleitungselements (20, 120) in Bezug zu einer Ansicht von außerhalb des Luftausströmers durch die Auslassöffnung (16, 116) in den Luftkanal (18, 118) zumindest teilweise verdeckt wird.

8. Luftausströmer nach Anspruch 7, **dadurch gekennzeichnet, dass**
das Gehäuse (10, 110) eine Einfassung (12, 112) umfasst, die die Auslassöffnung (16, 116) definiert, wobei die Einfassung (12, 112) das mindestens eine des mindestens einen einstellbaren vorderen Luftleitungselements (20, 120) zumindest teilweise verdeckt.

9. Luftausströmer nach einem der vorstehenden Ansprüche, **dadurch gekennzeichnet, dass**
das mindestens eine einstellbare hintere Luftleitungselement (44, 144) dazu eingerichtet ist, in eine geschlossene Stellung bewegt zu werden, in der der Luftkanal (18, 118) verschlossen wird.

## Revendications

1. Aérateur pour un véhicule, l'aérateur comprenant un boîtier (10, 110) pourvu d'une ouverture d'entrée (14, 114) et d'une ouverture de sortie (16, 116), le boîtier (10, 110) formant un canal d'air (18, 118) pour l'écoulement d'air depuis l'ouverture d'entrée (14, 114) jusqu'à l'ouverture de sortie (16, 116), et au moins un élément guide d'air avant réglable (20, 120) et au moins un élément guide d'air arrière réglable (44, 144) étant agencés dans le boîtier (10, 110), l'au moins un élément guide d'air arrière réglable (44, 144) étant positionné en amont de l'au moins un élément guide d'air avant réglable (20, 120) par rapport à la direction d'écoulement (L) de l'air, comprenant en outre un élément de commande (56, 156) agencé dans la région de l'ouverture de sortie (16, 116) pour le réglage d'au moins l'au moins un élément guide d'air arrière réglable (44, 144), l'élément de commande (56, 156) étant porté par au moins un de l'au moins un élément guide d'air arrière réglable (44, 144) par l'intermédiaire d'un élément de transmission (36, 136) s'étendant entre l'élément de commande (56, 156) et l'au moins un élément guide d'air arrière réglable (44, 144), l'élément de transmission (36, 136) étant adapté à transmettre un mouvement de l'élément de commande (56, 156) en un mouvement de l'au moins un élément guide d'air arrière réglable (44, 144),
l'élément de transmission pour la transmission d'un mouvement de l'élément de commande (56, 156) en un mouvement de l'au moins un élément guide d'air arrière réglable (44, 144) constituant un premier élément de transmission (36, 136),
**caractérisé en ce que**
l'élément de commande (56, 156) est relié à l'au moins un élément guide d'air avant réglable (20, 120) en amont de l'ouverture de sortie (16, 116) par l'intermédiaire d'un deuxième élément de transmission (30, 130), le deuxième élément de transmission (30, 130) étant adapté à transmettre un mouvement de l'élément de commande (56, 156) en un mouvement de l'au moins un élément guide d'air avant réglable (20, 120), le premier élément de transmission (36, 136) comprenant un creux (39, 139) pour la réception d'une partie du deuxième élément de transmission (30, 130) au cours du mouvement de l'au moins un élément guide d'air avant réglable (20, 120).

2. Aérateur selon la revendication 1,
**caractérisé en ce que**
au moins deux éléments guides d'air avant réglables (20, 120) sont prévus, l'élément de commande (56, 156) et/ou le premier élément de transmission (36, 136) s'étendant à travers un dégagement entre les au moins deux éléments guides d'air avant réglables (20, 120).

3. Aérateur selon l'une des revendications précédentes,
**caractérisé en ce que**
le premier élément de transmission (36, 136) et/ou le deuxième élément de transmission (30, 130) sont au moins partiellement dissimulés par l'élément de commande (56, 156) en regardant depuis l'extérieur de l'aérateur à travers l'ouverture de sortie (16, 116) jusque dans le canal d'air (18, 118).

4. Aérateur selon l'une des revendications précédentes,
**caractérisé en ce que**
l'au moins un élément guide d'air avant réglable comprend au moins une lamelle guide d'air avant (20, 120) pivotante autour d'un premier axe de rotation (A) et **en ce que** l'au moins un élément guide d'air arrière réglable comprend au moins une lamelle guide d'air arrière (44, 144) pivotante autour d'un deuxième axe de rotation (B), le premier axe de rotation (A) étant essentiellement perpendiculaire au deuxième axe de rotation (B).

5. Aérateur selon la revendication 4,
**caractérisé en ce que**
l'élément de commande (56, 156) est adapté à être animé d'un mouvement fondamentalement dans deux directions sur un premier axe de mouvement (M₁) et dans deux directions sur un deuxième axe de mouvement (M₂), le premier axe de mouvement (M₁) et le deuxième axe de mouvement (M₂) étant perpendiculaires entre eux.

6. Aérateur selon l'une des revendications précédentes,
**caractérisé en ce que**
l'élément de commande (56, 156) est porté par l'au moins un élément guide d'air arrière réglable (44, 144) de manière à ce que, pour animer d'un mouvement l'au moins un élément guide d'air arrière réglable (44, 144), l'élément de commande (56, 156) soit mobile le long d'une courbe.

7. Aérateur selon l'une des revendications précédentes,
**caractérisé en ce que**
au moins un de l'au moins un élément guide d'air avant réglable (20, 120) est dissimulé au moins partiellement en regardant depuis l'extérieur de l'aérateur à travers l'ouverture de sortie (16, 116) jusque dans le canal d'air (18, 118).

8. Aérateur selon la revendication 7,
**caractérisé en ce que**
le boîtier (10, 110) comprend un encadrement (12, 112) définissant l'ouverture de sortie (16, 116), l'encadrement (12, 112) dissimulant l'au moins un de l'au moins un élément guide d'air avant réglable (20, 120) au moins partiellement.

9. Aérateur selon l'une des revendications précédentes,
**caractérisé en ce que**
l'au moins un élément guide d'air arrière réglable (44, 144) est adapté à être amené dans une position fermée fermant le canal d'air (18, 118).
